# FASCICULE DE BREVET EUROPEEN

(11) **EP 2 066 187 B1**
(45) Date de publication et mention de la délivrance du brevet: **24.02.2010**
(21) Numéro de dépôt: 07848232.0
(22) Date de dépôt: 13.09.2007
(51) Int. Cl.: A23L 3/04, A23B 7/00, B65B 25/22

(54) **PROCÉDÉ POUR TRAITER DES PRODUITS CONSOMMABLES PRÉCUITS**
VERFAHREN ZUR VERARBEITUNG VON FERTIGNAHRUNGSPRODUKTEN
METHOD FOR PROCESSING PRECOOKED CONSUMABLE PRODUCTS

(30) Priorité: 18.09.2006 FR 0608153
(43) Date de publication de la demande: 10.06.2009
(73) Titulaire: LABO Concept Nature, 84911 Avignon (FR)
(72) Inventeur: BEAUFILS, Philippe, 21130 Athée (FR); CHARLES, Romain, 30340 Méjanes les Alès (FR); BIRON, Philippe, 84120 Saint Didier (FR)
(74) Mandataire: Bentz, Jean-Paul
(86) Numéro de dépôt international: PCT/FR2007/001492
(87) Numéro de publication internationale: WO 2008/034966

(56) Documents cités:
- EP-A- 1 621 083
- WO-A-2004/045985
- FR-A1- 2 852 921

## Description

La présente invention concerne un procédé pour traiter des produits consommables, en particulier des produits consommables tels que des légumes et des fruits.

Les fruits et les légumes représentent même après cuisson une source de vitamines et de minéraux très importante, qui varie selon le mode de préparation, et notamment de cuisson.

La cuisson des fruits et des légumes peut être réalisée de diverses manières, notamment à l'eau bouillante, à l'étouffée, ou à la vapeur. Les légumes, tels que les pommes de terre, peuvent également être cuits au four, ou dans la cendre, ou encore sautés (par exemple à la poêle ou dans un wok), ou encore frits dans de l'huile dont la température est d'au moins 160°C. Ces procédés de cuisson sont soit peu rapides (cuisson à l'eau bouillante, à l'étouffée ou à la vapeur), soit néfastes pour la santé (friture).

La cuisson de certains légumes tels que le chou-fleur, le brocoli, la courgette, l'asperge, l'artichaut, le poireau, les haricots verts et plus particulièrement les pommes de terre, est avantageusement une cuisson à la vapeur, qui est traditionnellement réalisée en immergeant les légumes dans de l'eau bouillante ou au moyen d'un autocuiseur de type autoclave. Le procédé de cuisson à la vapeur est relativement long si l'on désire obtenir une cuisson homogène et à coeur, et il ne préserve pas les vitamines contenues dans les produits. En outre, la cuisson à la vapeur des légumes ne permet pas de diminuer la quantité d'eau de végétation contenue dans les produits, ce qui les rend difficilement cuisinables.

La présente invention se propose donc d'apporter une solution à ces différents problèmes de cuisson de produits alimentaires tels que des légumes, en leur faisant préalablement subir une pré-cuisson partielle par micro-ondes dans un emballage partiellement fermé.

Il est connu de l'homme de l'art de traiter un produit alimentaire par un procédé comprenant une étape de pré-cuisson partielle du produit. Ainsi, par exemple, la demande de brevet français FR 2 852 921 décrit un procédé pour chauffer et conditionner un produit alimentaire, dans lequel on chauffe le produit contenu dans un emballage partiellement fermé, puis on ferme totalement l'emballage. Toutefois, dans le procédé de FR 2 852 921, après chauffage de l'emballage, ce dernier est fermé complètement et de manière hermétique, ce qui conduit à une mise sous vide naturelle des produits précuits. Ils présentent alors l'inconvénient de ne pouvoir être surgelés ou congelés, sans risque de perte au niveau de leur texture ou de leur forme lors de leur réchauffage ultérieur à la température de consommation.

La présente invention a pour but de remédier à l'ensemble de ces inconvénients et d'apporter une solution au problème posé.

La présente invention concerne à cet effet un procédé pour traiter et conditionner un produit consommable, en particulier un produit alimentaire, comprenant les étapes suivantes :
a) introduction dans un emballage dudit produit ;
b) fermeture partielle de l'emballage en préservant au moins une zone de contrôle de pression à la surface de l'emballage, et
c) pré-cuisson partielle par micro-ondes du produit dans l'emballage partiellement fermé à une température entre 90 et 110°C, de préférence de l'ordre de 100°C,
**caractérisé en ce que** l'étape de pré-cuisson c) du produit est immédiatement suivie d'une étape d) de déshydratation partielle du produit alimentaire.

Par pré-cuisson, on entend au sens de la présente invention la cuisson incomplète d'un produit à laquelle il est soumis préalablement à son conditionnement, la cuisson devant être terminée ultérieurement en réchauffant ou en cuisinant le produit.

Cette étape de pré-cuisson c) du produit alimentaire est généralement réalisée selon un cycle thermique qui comprend :
c1) une étape de montée en température jusqu'à une température de 100°C suivie
c2) d'une étape de maintien à la température atteinte.

L'étape c) de pré-cuisson du produit dans l'emballage partiellement fermé permet de cuire très rapidement en continu et à coeur, les produits contenus dans l'emballage. Au cours de cette étape de pré-cuisson, une partie de l'eau contenue à l'intérieur du produit est évaporée au niveau de la zone de contrôle de pression à la surface de l'emballage, afin d'éviter tout risque d'éclatement de l'emballage en cours de cuisson.

L'étape de déshydratation partielle d), qui suit l'étape de pré-cuisson c) permet de réduire la quantité d'eau contenue dans les produits. On obtient à l'issue de cette étape de déshydratation d) des produits légèrement asséchés, mais dont les fibres sont fermes, au lieu de ramollies et/ou déstructurées comme c'est généralement le cas dans les procédés de cuisson à la vapeur traditionnels.

Le procédé selon l'invention présente l'avantage de ne pas nécessiter de cuisiner les produits ainsi traités, pour lesquels un simple réchauffage suffit (par exemple dans un four traditionnel, au grill, ou plus rapidement dans un four à micro-ondes). Quel que soit le moyen de réchauffage utilisé, le produit traité selon le procédé de l'invention, conservera sa tenue, sa texture et toutes les saveurs d'un produit frais, sans présenter ni écrasement, ni agglomérat.

Par produit frais, on entend, au sens de la présente invention, un produit qui n'a pas subi après sa fabrication un traitement de préservation autre que la mise sous emballage étanche et le maintien à température froide, et qui présente une date limite de consommation de 21 jours.

Dans un premier mode de réalisation de l'invention, on utilisera comme emballage, une barquette ou une poche en matériau composite ou plastique, perméable aux micro-ondes, qui présente un volume d'au moins deux fois le volume du produit, et dont la zone de contrôle de pression est constituée par une valve ou une cheminée de dégazage, pour évacuer la vapeur créée lors de l'étape c) de pré-cuisson. Selon ce mode de réalisation du procédé de l'invention, l'étape d) de déshydratation partielle de la surface du produit est réalisée par ouverture totale de l'emballage, suivie d'un temps d'attente de 0 à 5 minutes, pour permettre l'évaporation de la vapeur d'eau contenue dans le produit. Ce temps d'attente varie en fonction du pourcentage de matière sèche des produits.

Pour obtenir une pré-cuisson homogène à coeur du produit, il est avantageux d'introduire dans la poche ou la barquette 1 à 2 ml d'un liquide additionnel pour 100 g de produit. Cet ajout de liquide additionnel, qui se fait, lors de l'introduction du produit, permet d'obtenir très rapidement dans l'emballage la création de vapeur d'eau sous une pression de 0,2 à 0,8 bar. Pour améliorer encore l'homogénéité de la pré-cuisson à coeur du produit, on insuffle de l'air chaud dans l'enceinte du micro-onde, soit au niveau de la zone de traitement du micro-onde lors de la cuisson, soit au niveau des pièges à ondes en fin de cuisson.

Le liquide additionnel peut être aqueux ou non aqueux.

A titre de liquides aqueux utilisables en tant que liquide additionnel dans le procédé de l'invention, on peut notamment citer l'eau pure, ou l'eau avec un ou plusieurs additifs.

A titre d'additifs utilisables dans le liquide additionnel aqueux du procédé de l'invention, on peut notamment citer les colorants, les conservateurs, les agents de saveur, les parfums, et les corps gras émulsionnés.

A titre de liquides non aqueux utilisables en tant que liquide additionnel dans le procédé de l'invention, on peut notamment citer les alcools et les émulsions eau-huile (E/H).

Avantageusement, l'évaporation de la vapeur d'eau pourra être couplée avec un égouttage du produit alimentaire, pendant une durée de 0 à 5 minutes.

L'évaporation et l'égouttage du produit seront sont de préférence réalisés immédiatement après l'ouverture totale de l'emballage par déversement des produits précuits sur un tapis de sortie convoyeur vibrant, dont la vitesse d'avancement est variable. Cette opération doit être réalisée avec rigueur et précision, afin de contrôler au mieux la quantité d'eau de végétation contenue à l'intérieur des produits que l'on souhaite extraire. Ainsi, par exemple, pour évaporer 30 à 50 g d'eau de végétation dans 1 kg de pommes de terre précuite à ± 102°C, on règle la vitesse d'avancement du tapis à 2 mètres par minute. Dans ce cas, la durée de l'évaporation varie entre 30 secondes et 1 minute selon la température ambiante.

Avantageusement, l'évaporation de la vapeur d'eau pourra être arrêtée par refroidissement brusque, soit par des systèmes classiques à froid mécanique (cellules à refroidissement rapide), soit par des systèmes à froid cryogéniques (azote liquide).

I1 est également possible d'envisager pour ce mode de réalisation du procédé de l'invention un refroidissement brusque par trempage dans un liquide de réfrigération, tel qu'une solution aqueuse ou huileuse présentant une température de 0 à 5°C. Ce liquide de réfrigération est avantageusement aromatisé et/ou enrichi en un ou plusieurs additifs et/ou compléments nutritionnels.

A titre d'additifs et/ou de compléments nutritionnels utilisables dans le liquide de réfrigération du procédé de l'invention, on peut notamment citer des solutions enrichies en antioxydants, en calcium, et/ou en vitamines.

Avantageusement, le produit précuit par micro-ondes et déshydraté superficiellement pourra être marqué, grillé ou poêlé à l'issue du refroidissement brusque par trempage.

Dans un deuxième mode de réalisation du procédé de l'invention, on utiliser comme emballage une boite hermétique semi-rigide fermée par un couvercle, perméable aux micro-ondes, présentant un volume d'au moins deux fois le volume du produit alimentaire, et dont la zone de contrôle de la pression est constituée par une valve disposée sur le couvercle de ladite boîte, pour évacuer la vapeur créée lors de l'étape c) de pré-cuisson. L'emballage contient, outre le produit alimentaire, un liquide additionnel présent à raison de 1 à 2 ml pour 100 g de produit, de manière à permettre lors de l'étape de pré-cuisson c) la création de vapeur d'eau sous une pression minimale de 0, 4 bar. Selon ce mode de réalisation du procédé de l'invention, la déshydratation partielle d) du produit alimentaire est réalisée par un refroidissement brusque de la boîte et de son contenu.

A titre de liquide additionnel utilisable dans ce mode de procédé de l'invention, on pourra avantageusement utiliser les liquides aqueux ou non aqueux qui sont utilisables dans le premier mode de réalisation du procédé de l'invention décrit précédemment.

Dans le deuxième mode de réalisation de l'invention, le refroidissement brusque consiste à réfrigérer très rapidement les produits dans leur boite hermétique, ce qui génère du sous-vide. Par suite, le refroidissement brusque provoque grâce au sous-vide généré, une déshydratation partielle de la surface du produit.

Avantageusement, le produit précuit par micro-ondes et déshydraté superficiellement pourra être marqué, grillé (par exemple en l'exposant pendant un laps de temps très court à une chaleur vive de type grill électrique, de façon à obtenir un effet de « grillé », au moins sur l'un des cotés du produit) ou poêlé à l'issue du refroidissement brusque.

Quel que soit le mode de réalisation du procédé de l'invention, le produit alimentaire précuit et partiellement déshydraté obtenu à l'issue de l'étape d) de déshydratation partielle peut être conditionné sous gaz neutre en tant que produit frais, et conservé à une température comprise entre 2 et 8°C, avec une date limite de consommation (DLC) moyenne de 21 jours. Ce mode de conservation du produit permet de le servir en l'état, comme garniture ou comme plat cuisiné.

Le produit précuit et partiellement déshydraté obtenu à l'issue de l'étape d) de déshydratation partielle peut être conditionné sous gaz neutre en tant que produit frais, et conservé à une température comprise entre 2 et 8°C, ou il peut être surgelé ou congelé en vue d'une conservation du produit de plusieurs mois. Le produit surgelé ou congelé est prêt à être réchauffé et consommé comme tel, ou à servir de base pour des recettes culinaires.

D'autres avantages et particularités de la présente invention apparaîtront dans les deux modes de réalisation donnés à titre non limitatifs et illustrés par les dessins mis en annexe, dans lesquels :
- la figure 1 représente un emballage de type poche souple ouvert et vide destiné à être traité et conditionné selon un premier mode de réalisation du procédé selon l'invention ;
- la figure 2 illustre les étapes successives de ce premier mode de réalisation appliquées à l'emballage illustré à la figure 1;

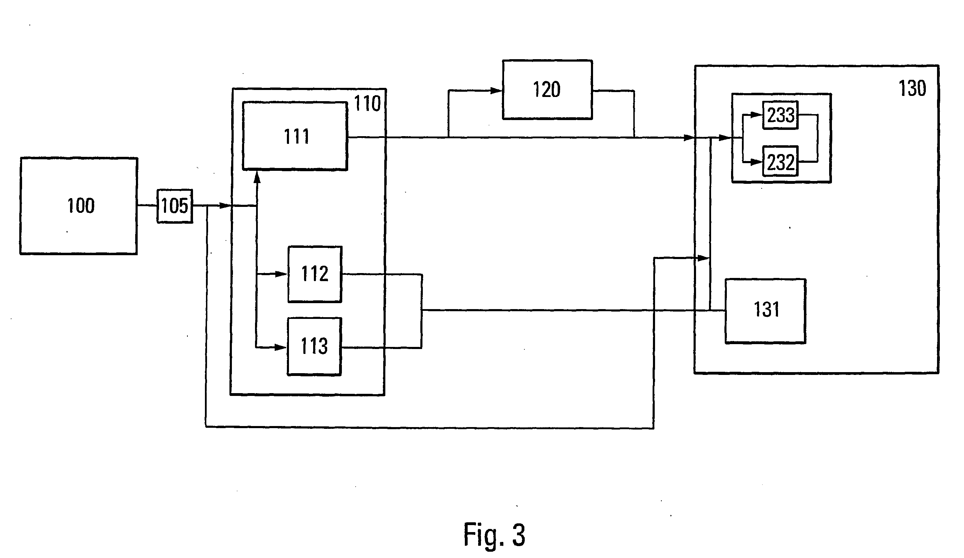

- la figure 3 illustre schématiquement les différentes étapes du premier mode de réalisation du procédé selon l'invention ;
- la figure 4 montre une installation permettant de mettre en oeuvre l'étape d'égouttage du premier mode de réalisation du procédé selon l'invention ;
- la figure 5 monture une installation en continu permettant de mettre en oeuvre l'étape de précuisson du premier mode de réalisation du procédé selon l'invention ;
- la figure 6 représente un emballage sous forme de boîte hermétique semi-rigide destiné à être traité et conditionné selon un deuxième mode de réalisation du procédé selon l'invention ;
- la figure 7 illustre schématiquement les différentes étapes du deuxième mode de réalisation du procédé selon l'invention.

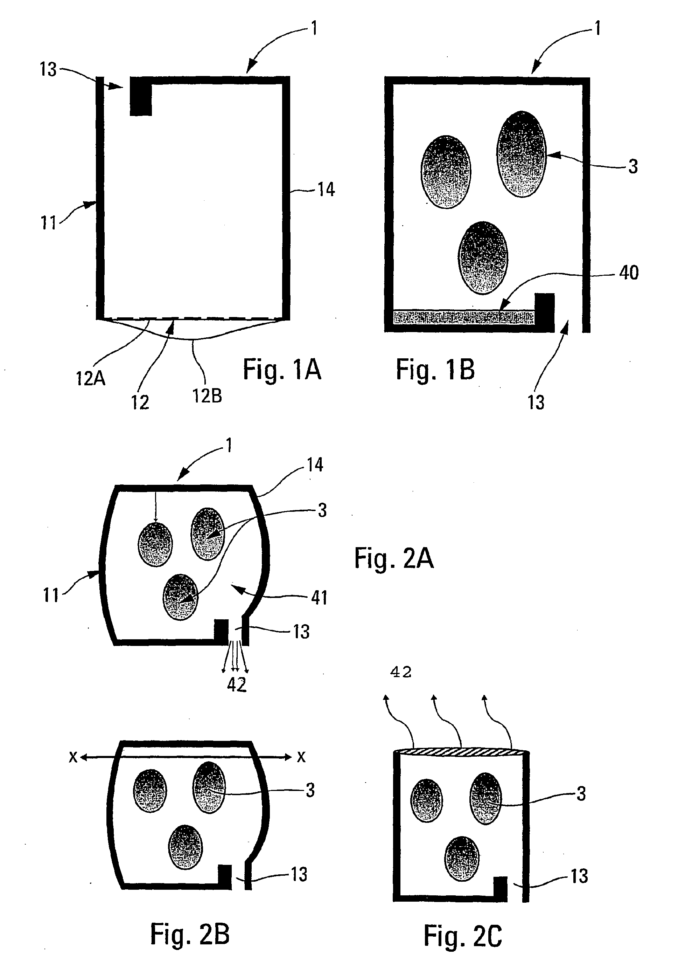

Sur la figure 1, est représenté un emballage 1, qui est constitué d'une poche souple apte à recevoir un produit alimentaire et qui présente une ouverture 12 entre ses parois 12A et 12B (figure lA). Des produits alimentaires 3, comme par exemple des morceaux de légumes, ont été introduits dans l'emballage 1 par l'ouverture 12, ainsi qu'un liquide additionnel 40 (figure 1B). La figure 1B montre que c'est en travers de cette ouverture 12 qu'est ensuite soudée partiellement la poche souple 1, en préservant une interruption locale des parois 13, qui fait office de cheminée de dégazage. Sur cette figure 1B, la poche souple 1 partiellement fermée est prête à subir la pré-cuisson par micro-ondes.

La figure 2 montre la situation de la poche lors de l'étape c) de pré-cuisson 100 par micro-ondes (figure 2A) et immédiatement après la pré-cuisson (figures 2B et 2C). Lors de l'étape de pré-cuisson, la pression à l'intérieur de la poche 1 augmente, en particulier à cause de l'évaporation de l'eau due à l'augmentation de la température. L'eau qui s'évapore peut intégralement provenir du produit consommable 3 (il peut par exemple s'agir de légumes frais ou semi-frais ayant une certaine teneur en eau), ou bien elle peut provenir du liquide 40 lorsque celui-ci est un liquide aqueux. La vapeur 40 emplit l'espace intérieur de la poche 1, et la vaporisation augmentant à mesure que la température s'élève, les parois 11, 14 se déforment de manière à permettre une augmentation de son volume. La vapeur en excès 42 s'échappe par la cheminée 13.

Avantageusement, la largeur de la cheminée 13 est suffisamment faible pour que tout en permettant une évaporation de la pression de vapeur en excès, elle permette aussi l'établissement d'une surpression à l'intérieur de la poche 1. En effet, une telle surpression de vapeur favorise la cuisson.

La figure 2B montre plus particulièrement la poche souple 1 à l'issue du chauffage 100, qui s'est gonflée sous l'effet de la surpression générée lors du chauffage 100. On voit également sur cette figure (2B) que l'ouverture de l'emballage se fait sur toute la longueur du côté opposé de celui 12 sur lequel a été aménagée la cheminée 13, selon une ligne de coupe X-X.

La figure 2C montre plus particulièrement la poche souple 1 après son ouverture totale et un temps d'attente de l'ordre de 1 à 5 minutes : le volume de la poche 1 a diminué suite à l'évaporation de la vapeur 42 qui était contenue dans la poche 1.

A l'issue de l'étape de déshydratation partielle d), on procède avantageusement à l'égouttage du contenu 3 de la poche 1.

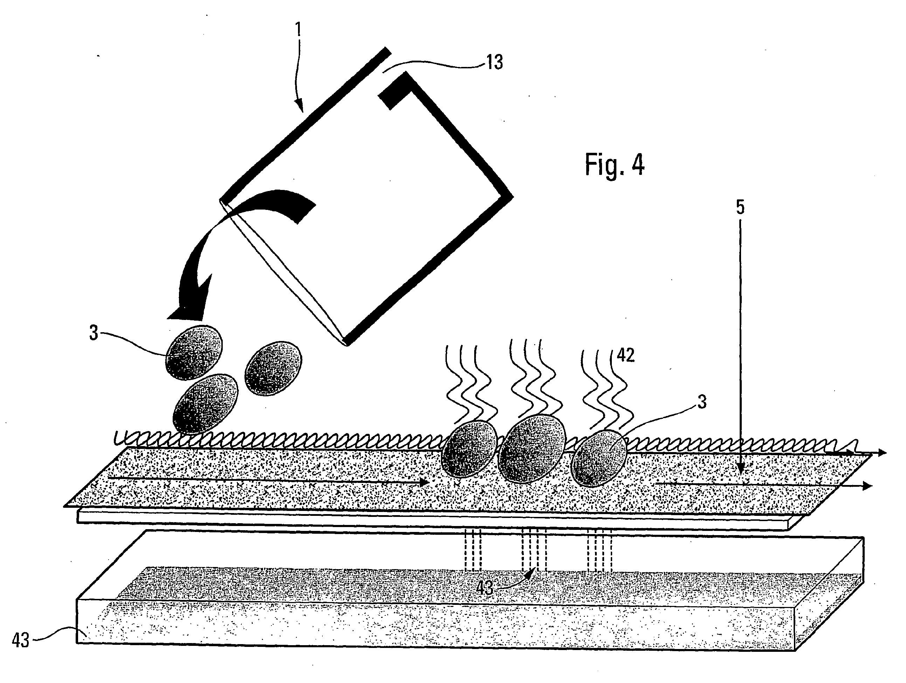

La figure 4 montre que les produits 3 sont déversés sur un tapis vibreur 5, qui avance de manière à permettre aux produits d'évaporer l'eau contenue dans les produits, tout en les égouttant. Un bac de récupération 6 est disposé juste au-dessous du tapis vibreur 5 permet de récupérer l'eau d'égouttage 43 (qui ne s'est pas évaporée) en provenance des produits 3.

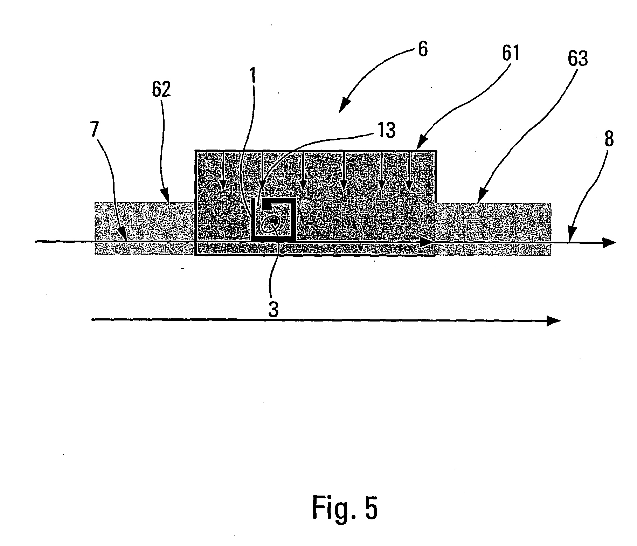

La figure 5 représente une installation en continu 6 permettant de mettre en oeuvre la pré-cuisson partielle par micro-ondes. Cette figure montre que l'installation 6 comprend :
- une enceinte principale 61, où sont générées les ondes, et
- des pièges à ondes 62, 63 disposés à l'entrée et à la sortie de l'enceinte principale 61, respectivement, pour capter les ondes et éviter qu'elles ne sortent de l'enceinte principale.

Les poches souples 1(contenant des produits 3) partiellement fermées sont amenées par un tapis d'entrée 7 jusque dans l'enceinte principale 61, et en sont évacuées par un tapis de sortie 8. Avant d'entrer dans l'enceinte de traitement 61, les poches, convoyées par le tapis d'entrée 7 traversent un premier piège à ondes 62, dit piège d'entrée. A la sortie de l'enceinte 61, les poches, convoyées par le tapis de sortie 8, traversent le deuxième piège à ondes 63 ou piège de sortie. On procède ensuite à l'ouverture totale de la poche 1.

Il est possible, en ralentissant le tapis de sortie 8, de faire démarrer l'étape de déshydratation partielle dans la poche entre la sortie de l'enceinte principale 61 et la sortie du piège de sortie 63.

Dans ce mode de réalisation, le tapis de sortie 8 est avantageusement un tapis vibreur, conforme à celui représenté sur la figure 4, de sorte que l'on peut procéder avantageusement à l'égouttage du contenu 3 de la poche, comme décrit ci-dessus.

A l'issue de l'étape d'égouttage, le produit subit avantageusement un refroidissement brusque 110, qui peut être réalisé soit par trempage 111 dans un liquide de réfrigération, soit à l'aide d'un système à froid mécanique 112 ou d'un système à froid cryogénique 113 (figure 4).

Dans le cas d'un refroidissement brusque par trempage dans un liquide de réfrigération, il est possible de traiter 120 par marquage, poêlage ou grillage le produit alimentaire 3, préalablement à son traitement ultérieur de conservation 130.

Si le produit 3 a été refroidi par trempage 111, il sera avantageusement conservé par congélation ou surgélation. Par contre, si le produit 3 a été refroidi à l'aide d'un système à froid mécanique 112 ou d'un système à froid cryogénique 113, il pourra être conservé par congélation ou surgélation, ou encore par conditionnement sous gaz neutre.

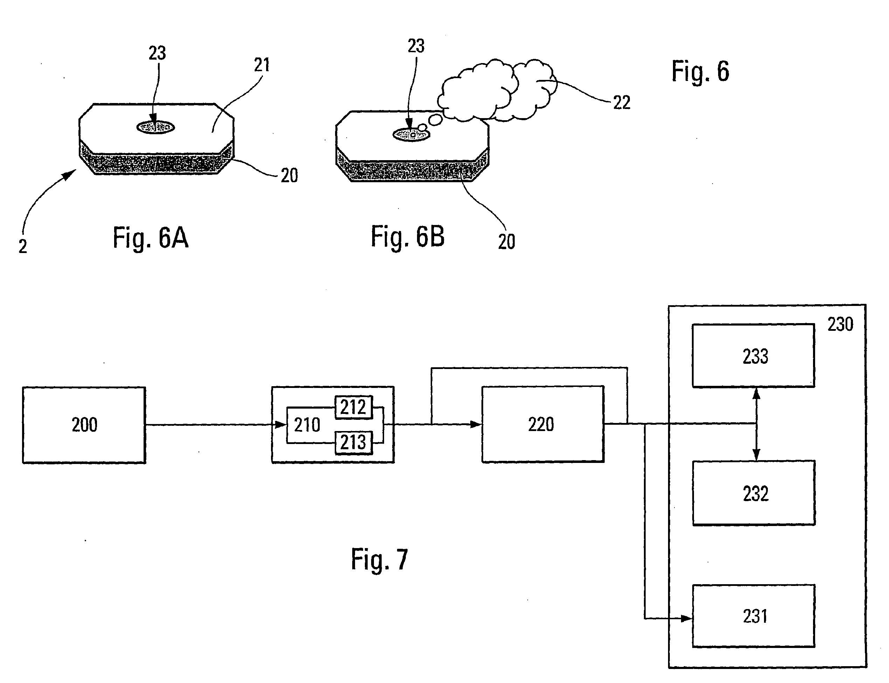

Sur la figure 6, l'emballage 2 est une boite hermétique 2 semi-rigide apte à recevoir un produit alimentaire 3 et qui présente un volume d'au moins deux fois le volume du produit. La boite 2 comprend un rebord 20 et un couvercle 21, sur lequel est disposé une valve, de type valve d'autocuiseur, pour évacuer la vapeur créée lors de l'étape de pré-cuisson 200 (figure 6A et 7). La figure 6B montre la situation de la boîte 2 lors de l'étape c) de pré-cuisson 200.

De même que pour le premier mode de réalisation de l'invention, de la vapeur en surpression 23 s'échappe par la zone de contrôle de pression, ici constituée par la valve 22.

Le produit précuit est ensuite partiellement déshydraté par un refroidissement brusque 210 à l'aide d'un système à froid mécanique (212) ou d'un système à froid cryogénique (213).

Le produit précuit et partiellement déshydraté peut, à l'issue du refroidissement brusque, être avantageusement exposé pendant un court moment à une chaleur vive de type grill électrique (étape 220).

A l'issue du refroidissement brusque du produit 210, ou le cas échéant de cette étape de grillage (220) du produit, ce dernier sera généralement conservé 230 par congélation 231 ou surgélation 232.

## Revendications

1. Procédé pour traiter un produit consommable (3), en particulier un produit alimentaire, comprenant les étapes suivantes :
a) introduction dans un emballage (1, 2) dudit produit, puis
b) fermeture partielle de l'emballage en préservant au moins une zone de contrôle de pression (13, 23) à la surface de l'emballage (1), et
c) pré-cuisson (100, 200) partielle par micro-ondes du produit dans l'emballage partiellement fermé à une température entre 90 et 110°C, de préférence de l'ordre de 100°C.
**caractérisé en ce que** l'étape de pré-cuisson c) (100, 200) du produit est immédiatement suivie d'une étape d) de déshydratation partielle (105, 210) du produit (3).

2. Procédé selon la revendication 1, **caractérisé en ce que** :
- l'emballage est une barquette ou une poche (1) en matériau composite ou plastique, perméable aux micro-ondes et présentant un volume d'au moins deux fois le volume du produit (3), et
- la zone de contrôle de pression à la surface de l'emballage (1) est constituée par une valve ou une cheminée de dégazage (13), pour évacuer la vapeur créée lors de l'étape c) de pré-cuisson, et
**en ce que** :
- la déshydratation partielle de la surface du produit (3) est réalisée à l'étape d) par ouverture totale de l'emballage (1), suivie d'un temps d'attente de 0 à 5 minutes, pour permettre l'évaporation de la vapeur d'eau contenue dans le produit.

3. Procédé selon la revendication 2, **caractérisé en ce que** l'emballage contient, outre le produit alimentaire (3), un liquide additionnel (40), présent à raison de 1 à 2 ml pour 100 g de produit (3).

4. Procédé selon la revendication 3, **caractérisé en ce qu'**on insuffle de l'air chaud dans l'enceinte du micro-onde, soit au niveau de la zone de traitement du micro-onde lors de la cuisson, soit au niveau des pièges à ondes en fin de cuisson.

5. Procédé selon l'une quelconque des revendications précédentes, **caractérisé en ce que** l'évaporation de la vapeur d'eau (41) est couplée avec un égouttage du produit (3), pendant une durée de 0 à 5 minutes.

6. Procédé selon la revendication 5, **caractérisé en ce que** l'évaporation et l'égouttage sont réalisés simultanément à l'issue de l'étape c) de pré-cuisson (100) par déversement des produits (3) précuits sur un tapis de sortie convoyeur (5) vibrant.

7. Procédé selon l'une quelconque des revendications 2 à 6, **caractérisé en ce que** l'évaporation de la vapeur d'eau est arrêtée par un refroidissement brusque (110).

8. Procédé selon la revendication 7, **caractérisé en ce que** le refroidissement brusque est réalisé par trempage (111) dans un liquide de réfrigération tel qu'une solution aqueuse ou huileuse, qui présente une température de 0 à 5°C.

9. Procédé selon la revendication 8, **caractérisé en ce que** le liquide de réfrigération est aromatisé et/ou enrichi d'un ou plusieurs additifs et/ou compléments nutritionnels.

10. Procédé selon l'une quelconque des revendications 7 à 9, **caractérisé en ce qu'**à l'issue du refroidissement brusque (110, 210), le produit (3) est soumis à un traitement (120, 220) de marquage, grillage ou poêlage.

11. Procédé selon la revendication 1, **caractérisé en ce que** :
- l'emballage est une boite hermétique (2) semi-rigide fermée par un couvercle (21), perméable aux micro-ondes, présentant un volume d'au moins deux fois le volume du produit (3),
- l'emballage contient, outre le produit (3), un liquide additionnel (40) présent à raison de 1 à 2 ml pour 100 g de produit, de manière à permettre la création de vapeur sous une pression minimale de 0,4 bar lors de l'étape de pré-cuisson c) du produit (3), et
- la zone de contrôle de la pression est constituée par une valve (23) disposée sur le couvercle (21) de ladite boîte (2), pour évacuer la vapeur créée lors de l'étape c), et **en ce que**
- la déshydratation partielle d) du produit (3) est réalisée par un refroidissement brusque (210) du produit.

12. Procédé selon la revendication 3 ou 11,
**caractérisé en ce que** le liquide additionnel est de l'eau pure ou de l'eau avec un ou plusieurs additifs, ou un alcool, ou une émulsion eau-huile.

13. Procédé selon la revendication 12 **caractérisé en ce que** les additifs sont choisis parmi les colorants, les conservateurs, les agents de saveur, les parfums, et les corps gras émulsionnés.

14. Procédé selon l'une quelconque des revendications précédentes, **caractérisé en ce que** l'étape de pré-cuisson c) (100, 200) du produit (3) est réalisée selon un cycle thermique qui comprend :
c1) une étape de montée en température jusqu'à une température de 100°C suivie
c2) d'une étape de maintien à la température atteinte.

15. Procédé selon l'une quelconque des revendications 7, 11 à 14, **caractérisé en ce que** le refroidissement brusque est arrêté à l'aide d'un système à froid mécanique (112, 212) ou d'un système à froid cryogénique (113, 213).

16. Procédé selon la revendication 15, **caractérisé en ce que** le produit (3) précuit et partiellement déshydraté obtenu à l'issue du refroidissement brusque (110, 210) est conditionné sous gaz neutre (131, 231) et conservé à une température comprise entre 2 et 10°C.

17. Procédé selon l'une quelconque des revendications 7 à 15, **caractérisé en ce que** le produit (3) précuit et partiellement déshydraté obtenu à l'issue du refroidissement brusque (110, 210) ou le cas échéant, à l'issue de l'étape de marquage, grillage ou poêlage (120, 220), est congelé (132, 232) ou surgelé (133, 233).

18. Procédé selon l'une quelconque des revendications précédentes, **caractérisé en ce que** l'on achève par réchauffage la cuisson du produit (3) précuit et partiellement déshydraté.

## Claims

1. Method for treating a consumable product (3), in particular a food product, including the following steps:
a) introduction of said product into a packaging (1, 2), then
b) partial closure of the packaging while preserving at least one pressure control zone (13, 23) at the surface of the packaging (1), and
c) partial microwave precooking (100, 200) of the product in the partially closed packaging at a temperature between 90 and 110 °C, preferably of the order of 100 °C,
**characterised in that** the step of precooking c) (100, 200) of the product is immediately followed by a step d) of partial dehydration (105, 210) of the product (3).

2. Method according to claim 1, **characterised in that**:
- the packaging is a microwave-permeable tray or pouch (1) which is made of composite or plastics material and has a volume of at least twice the volume of the product (3), and
- the pressure control zone at the surface of the packaging (1) consists of a degassing valve or vent (13) for discharging the steam produced during the precooking step c), and **in that**
- the partial dehydration of the surface of the product (3) is carried out in step d) by total opening of the packaging (1), followed by a waiting time of 0 to 5 minutes, in order to allow the water vapour contained in the product to evaporate.

3. Method according to claim 2, **characterised in that** the packaging contains, apart from the food product (3), an additional liquid (40) present in a proportion of 1 to 2 ml for 100 g of product (3).

4. Method according to claim 3, **characterised in that** hot air is blown into the chamber of the microwave, either in the region of the treatment zone of the microwave during cooking or in the region of the wave traps at the end of cooking.

5. Method according to any one of the preceding claims, **characterised in that** the evaporation of the water vapour (41) is coupled with a draining of the product (3) for a duration of 0 to 5 minutes.

6. Method according to claim 5, **characterised in that** the evaporation and the draining are carried out simultaneously at the end of the precooking step c) (100) by pouring the precooked products (3) onto a vibrating conveyor output belt (5).

7. Method according to any one of claims 2 to 6, **characterised in that** the evaporation of the water vapour is stopped by a sudden cooling (110).

8. Method according to claim 7, **characterised in that** the sudden cooling is carried out by soaking (111) in a refrigerating liquid such as an aqueous or oil solution having a temperature of 0 to 5 °C.

9. Method according to claim 8, **characterised in that** the refrigerating liquid is flavoured and/or enriched with one or more nutritional additives and/or supplements.

10. Method according to any one of claims 7 to 9, **characterised in that** at the end of the sudden cooling (110, 210), the product (3) is subjected to a branding, grilling or pan-roasting treatment (120, 220).

11. Method according to claim 1, **characterised in that**:
- the packaging is a microwave-permeable, semi-rigid air-tight box (2) which is closed by a lid (21) and has a volume at least twice the volume of the product (3),
- the packaging contains, apart from the product (3), an additional liquid (40) present in a proportion of 1 to 2 ml for 100 g of product, so as to allow steam to be produced at a minimal pressure of 0.4 bar during the step of precooking c) of the product (3), and
- the pressure control zone consists of a valve (23) arranged on the lid (21) of said box (2) in order to discharge the steam produced during step c), and **in that**
- the partial dehydration d) of the product (3) is carried out by a sudden cooling (210) of the product.

12. Method according to claim 3 or 11, **characterised in that** the additional liquid is pure water or water with one or more additives, or an alcohol, or a water/oil emulsion.

13. Method according to claim 12, **characterised in that** the additives are selected from colouring agents, preservatives, flavouring agents, fragrances, and emulsified fats.

14. Method according to any one of the preceding claims, **characterised in that** the step of precooking c) (100, 200) of the product (3) is carried out in a heat cycle comprising:
c1) a step in which the temperature rises to a temperature of 100 °C followed
c2) by a step in which the temperature reached is maintained.

15. Method according to any one of claims 7, 11 to 14, **characterised in that** the sudden cooling is stopped with the aid of a mechanical cold system (112, 212) or of a cryogenic cold system (113, 213).

16. Method according to claim 15, **characterised in that** the precooked and partially dehydrated product (3) obtained at the end of the sudden cooling (110, 210) is packaged under neutral gas (131, 231) and preserved at a temperature of between 2 and 10 °C.

17. Method according to any one of claims 7 to 15, **characterised in that** the precooked and partially dehydrated product (3) obtained at the end of the sudden cooling (110, 210) or, if appropriate, at the end of the branding, grilling or pan-roasting step (110, 210) is frozen (132, 232) or deep-frozen (133, 233).

18. Method according to any one of the preceding claims, **characterised in that** the precooked and partially dehydrated product (3) is cooked by reheating.

## Patentansprüche

1. Verfahren zum Behandeln eines verbrauchbaren Produkts (3), insbesondere eines Nahrungsmittelprodukts, mit den folgenden Schritten:
a) Einführen des genannten Produkts in eine Verpackung (1, 2), dann
b) teilweises Verschließen der Verpackung, wobei mindestens eine Druckkontrollzone (13, 23) an der Oberfläche der Verpackung (1) erhalten bleibt, und
c) teilweises Vorgaren (100, 200), durch Mikrowellen, des Produkts in der teilweise geschlossenen Verpackung bei einer Temperatur zwischen 90°C und 110°C, vorzugsweise im Bereich von 100°C,
**dadurch gekennzeichnet, dass** der Schritt des Vorgarens c) (100, 200) des Produkts unmittelbar gefolgt wird von einem Schritt d) eines teilweisen Wasserentzugs (105, 210) aus dem Produkt (3).

2. Verfahren nach Anspruch 1, **dadurch gekennzeichnet, dass**:
- die Verpackung eine Schale oder ein Beutel (1) aus einem Verbundmaterial oder Kunststoffmaterial ist, die durchlässig für Mikrowellen ist und ein Volumen aufweist, das zumindest das Doppelte des Volumens des Produkts (3) beträgt, und
- die Druckkontrollzone an der Oberfläche der Verpackung (1) durch ein Ventil oder einen Abzug zur Entgasung (13) gebildet ist, um den Dampf abzuführen, der beim Schritt c) des Vorgarens erzeugt wird, und **dadurch**, dass:
- der teilweise Wasserentzug von der Oberfläche des Produkts (3) in Schritt d) durch vollständige Öffnung der Verpackung (1) erzielt wird, gefolgt von einer Wartezeit von 0 bis 5 Minuten, um die Verdampfung des in dem Produkt enthaltenden Wasserdampfs zu ermöglichen.

3. Verfahren nach Anspruch 2, **dadurch gekennzeichnet, dass** die Verpackung außer dem Nahrungsmittelprodukt (3) eine zusätzliche Flüssigkeit (40) enthält, die in einem Verhältnis von 1 bis 2 ml je 100g an Produkt (3) enthalten ist.

4. Verfahren nach Anspruch 3, **dadurch gekennzeichnet, dass** heiße Luft in den Mikrowellenofen eingeblasen wird, entweder im Bereich der Zone der Behandlung durch Mikrowellen beim Garen oder im Bereich der Wellenfänger am Ende des Garens.

5. Verfahren nach einem der vorangehenden Ansprüche, **dadurch gekennzeichnet, dass** die Verdampfung des Wasserdampfs (41) mit einem Abtropfen des Produkts (3) gekoppelt wird, während einer Dauer von 0 bis 5 Minuten.

6. Verfahren nach Anspruch 5, **dadurch gekennzeichnet, dass** die Verdampfung und das Abtropfen gleichzeitig am Ausgang des Schritts c) des Vorgarens (100) realisiert werden, indem die vorgegarten Produkte (3) auf einen vibrierenden Ausgangsbandförderer (5) geschüttet werden.

7. Verfahren nach einem der Ansprüche 2 bis 6, **dadurch gekennzeichnet, dass** die Verdampfung des Wasserdampfs durch ein plötzliches Abkühlen (110) gestoppt wird.

8. Verfahren nach Anspruch 7, **dadurch gekennzeichnet, dass** die plötzliche Abkühlung durch ein Eintauchen (111) in eine Kühlflüssigkeit wie etwa eine wässrige oder ölige Lösung ausgeführt wird, die eine Temperatur von 0 bis 5°C aufweist.

9. Verfahren nach Anspruch 8, **dadurch gekennzeichnet, dass** die Kühlflüssigkeit aromatisiert ist und/oder mit einem oder mehreren Zusätzen und/oder Nahrungsergänzungsstoffen angereichert ist.

10. Verfahren nach einem der Ansprüche 7 bis 9, **dadurch gekennzeichnet, dass** nach Beendigung des plötzlichen Abkühlens (110, 210) das Produkt (3) einer Behandlung (120, 220) durch Markieren, Rösten oder Braten unterworfen wird.

11. Verfahren nach Anspruch 1, **dadurch gekennzeichnet, dass**:
- die Verpackung eine hermetische halbstarre Dose (2) ist, die durch einen Deckel (21) verschlossen ist, für Mikrowellen durchlässig ist und ein Volumen aufweist, das zumindest das Doppelte des Volumens des Produkts (3) beträgt,
- die Verpackung außer dem Produkt (3) eine zusätzliche Flüssigkeit (40) enthält, im Verhältnis von 1 bis 2 ml je 100g an Produkt, in einer Weise, um die Erzeugung von Dampf unter einem minimalen Druck von 0,4 bar zu erzeugen, bei dem Schritt des Vorgarens c) des Produkts (3), und
- die Druckkontrollzone durch ein Ventil (23) gebildet ist, das auf dem Deckel (21) der genannten Dose (2) angeordnet ist, um den Dampf abzuziehen, der beim Schritt c) erzeugt wird, und dass
- der teilweise Wasserentzug d) des Produkts (3) durch eine plötzliche Abkühlung (210) des Produkts erzielt wird.

12. Verfahren nach Anspruch 3 oder 11, **dadurch gekennzeichnet, dass** die zusätzliche Flüssigkeit reines Wasser oder Wasser mit einem oder mehreren Zusätzen ist, oder ein Alkohol oder eine Wasser-Öl-Emulsion.

13. Verfahren nach Anspruch 12, **dadurch gekennzeichnet, dass** die Zusätze ausgewählt sind unter Farbstoffen, Konservierungsstoffen, Geschmacksstoffen, Duftstoffen und emulgierten Fettstoffen.

14. Verfahren nach einem der vorangehenden Ansprüchen, **dadurch gekennzeichnet, dass** der Schritt des Vorgarens c) (100, 200) des Produkts (3) in einem thermischen Zyklus ausgeführt wird, der umfasst:
c1) einen Schritt eines Temperaturanstiegs bis zu einer Temperatur von 100°C, gefolgt von
c2) einem Schritt des Haltens der erreichten Temperatur.

15. Verfahren nach einem der Ansprüche 7, 11 bis 14, **dadurch gekennzeichnet, dass** die plötzliche Abkühlung mit Hilfe eines mechanischen Kältesystems (112, 212) oder eines kryonogenen Kältesystems (113, 213) abgebrochen wird.

16. Verfahren nach Anspruch 15, **dadurch gekennzeichnet, dass** das vorgegarte und einem teilweisen Wasserentzug unterworfene Produkt (3), das nach dem plötzlichen Abkühlen (110, 210) erhalten worden ist, unter einem neutralen Gas (131, 231) konditioniert wird und bei einer Temperatur, die zwischen 2°C und 10°C liegt, konserviert wird.

17. Verfahren nach einem der Ansprüche 7 bis 15, **dadurch gekennzeichnet, dass** das vorgegarte und einem teilweisen Wasserentzug unterworfene Produkt (3), das nach Beendigung der plötzlichen Abkühlung (110, 210) oder gegebenenfalls nach dem Ende des Schritts des Markierens, Röstens oder Bratens (120, 220) gefroren (132, 232) oder tiefgefroren (133, 233) wird.

18. Verfahren nach einem der vorangehenden Ansprüche, **dadurch gekennzeichnet, dass** das Garen des Vorgegarten und einem teilweisen Wasserentzug unterworfenen Produkts (3) durch Vorwärmung erreicht wird.
